# EUROPÄISCHE PATENTSCHRIFT

(11) **EP 1 382 092 B1**
(45) Veröffentlichungstag und Bekanntmachung des Hinweises auf die Patenterteilung: **25.10.2006**
(21) Anmeldenummer: 02737782.9
(22) Anmeldetag: 11.04.2002
(51) Int. Cl.: H01R 13/52, H01R 13/66

(54) **KLEINBAUENDER KUPPLUNGSSTECKER, INSBESONDERE FÜR EINE PLANARE BREITBAND-LAMBDA-SONDE MIT VERLIERSCHUTZ FÜR EINZELADERDICHTUNGEN**
COMPACT COUPLER PLUG, PARTICULARLY FOR A PLANAR BROADBAND LAMBDA PROBE, IN WHICH SINGLE-CONDUCTOR SEALS ARE PREVENTED FROM BEING LOST
FICHE DE COUPLAGE COMPACTE NOTAMMENT DESTINEE A UNE SONDE LAMBDA A BANDE LARGE PLANE AVEC SECURITE ANTI-PERTE POUR JOINTS A CONDUCTEURS INDIVIDUELS

(30) Priorität: 19.04.2001 DE 20106745 U
(43) Veröffentlichungstag der Anmeldung: 21.01.2004
(73) Patentinhaber: ROBERT BOSCH GMBH, 70442 Stuttgart (DE)
(72) Erfinder: PADE, Wolfgang, 75428 Illingen (DE)
(86) Internationale Anmeldenummer: PCT/DE2002/001351
(87) Internationale Veröffentlichungsnummer: WO 2002/087025

(56) Entgegenhaltungen:
- WO-A-99/63632
- US-A- 5 240 433
- US-A- 6 132 256

## Beschreibung

Die Erfindung betrifft einen Kupplungsstecker, insbesondere für eine planare Lambda-Sonde, bestehend aus einem Gehäuse, nämlich einem Grundkörper und einem Deckelelement sowie elektrischen Bauteilen, die in das Gehäuse einlegbar und fixierbar sind, und einem Abgleichelement für eine Sonde, insbesondere eine planare Breitband-Lambdasonde, die in dem Kupplungsstecker oder über ein weiteres Kontaktelement ausserhalb des Kupplungssteckers anzubringen ist, sowie mindestens einer Dichtung, die die aus dem Kupplungsstecker austretende Einzelader gegenüber dem Inneren des Gehäuses abdichtet.

### Stand der Technik

Kupplungsstecker der vorstehenden Art sind in der Regel für die Verbindung zwischen einem Kabelbaumstecker und einer Lambda-Sonde ausgebildet, wobei die Anschlüsse, die im Kupplungsstecker vorgesehen sind, für Abgleich, Signal und/oder Heizung der Sonde vorgesehen sind. Die Lambda-Sonde und die Lambda-Regelung stellen heute in Verbindung mit dem 3-Wege-Katalysator ein wirksames Abgasreinigungsverfahren dar. Die Lambda-Sonde, die beispielsweise in ein Abgassystem eingeschraubt wird, umfasst einen Messfühler zur Feststellung des Sauerstoffgehalts im Abgas.

Der Restsauerstoffgehalt eignet sich sehr gut als Messgrösse und regelt das Luft-Kraftstoff-Verhältnis, da dieser präzise anzeigt, ob das Luft-Kraftstoff-Gemisch vollständig verbrennt.

Die Lambda-Sonde liefert dabei ein Spannungssignal, das den augenblicklichen Wert der Gemischzusammensetzung repräsentiert und den Gemischänderungen folgt. Die Kraftstoffzufuhr zum Motor wird durch eine Gemischaufbereitungsanlage entsprechend dem Signal der Lambda-Sonde derart geregelt, dass ein stöchiometrisches Luft-Kraftstoff-Verhältnis λ=1 erreicht wird.
Je nach Ausführungen des Abgassystems und den Einsatzbedingungen werden beheizte oder unbeheizte Sonden eingesetzt. Weitere Anwendungen findet die Lambda-Sonde ausserhalb von Kraftstoffahrzeugen, z. B. zur Regelung von Gasmotoren oder Öl-/Gasbrennern.

Insbesondere Breitband-Lambda-Sonden sind modular aufgebaut und erlauben in Verbindung mit der Planartechnik die Integration mehrerer Funktionen. Sie weisen in der Regel Funktionsschichten auf, die aus einer porösen Schutzschicht, aus einer Aussenelektrode, einer Sensorfolie, einer Innenelektrode, einer Referenzluftkanalfolie, einer Isolationsschicht, einem Heizelement, einer Heizfolie, einem Widerstand bzw. einem Abgleichelement und Anschlusskontakten bestehen.

Da die Breitband-Lambda-Sonden aus der Kombination einer Nernet-Konzentrationszelle (=Sensorzelle) mit einer Sauerstoff-Ionen transportierenden Pumpzelle besteht, kann sie nicht nur im stöchiometrischen Punkt bei λ=1, sondern auch im mageren und fetten Bereich sehr exakt messen.

Jede Sonde ist individuell abzugleichen. Hierzu weist die Sonde einen eingebauten Widerstand ("Mini-Hybrid") auf. Der Abgleich, der vorzugsweise mittels einem Laserstrahl erfolgt, wird dadurch ausgeführt, dass die Widerstandsschicht, die sich auf einem Keramiksubstrat befindet, entsprechend abgetragen wird, wodurch eine Widerstandsänderung herbeigeführt wird und damit ein Abgleich erfolgt.

Eine Ausführungsform besteht darin, dass die Abgleicheinheit bzw. der Widerstand unmittelbar an der Sonde angeordnet ist. Ein weiteres Ausführungsbeispiel besteht darin, dass der Widerstand ausserhalb, beispielsweise an einem mit der Sonde gekoppeltem Kabelbaumstecker untergebracht ist.

Bisher erfolgt der Abgleich dadurch, dass das Gehäuse des Kupplungsstekkers, in dem der Widerstand eingebaut ist, ohne das Deckelelement zur Abgleichstelle transportiert wird. Nach der entsprechenden Laserbearbeitung für den Abgleich wurde dann im Anschluss an einer weiteren Montagestelle das Deckelelement aufgesteckt.

Um zu verhindern, dass Feuchtigkeit, Schmutz oder ähnliches in den Kupplungsstecker eindringt und um zu gewährleisten, dass die entsprechende Atmosphäre innerhalb des Kupplungssteckers herrscht, weist das Deckelelement zusätzliche Dichtungen auf. Die Dichtungen selbst werden bei der Montage wahlweise und abhängig von dem entsprechenden Anwendungsfall an dem Deckelelement oder an dem Grundkörper angebracht. Die Dichtungen bestehen aus einem gummiartigen Material, das komprimierbar bzw. dehnbar ist, um zu gewährleisten, dass sich die Dichtung vollständig sowohl an die aus dem Gehäuse austretende Einzelader als auch an das Gehäuse bzw. an das Deckelelement dicht anlegt.

Ferner sind an dem Gehäuse des Kupplungssteckers Druckausgleichselemente angeordnet.

### Nachteile des Standes der Technik

Ein Nachteil der Ausführung des hier dargestellten Kupplungssteckers besteht darin, dass in zwei unterschiedlichen Arbeitsprozessen sowohl Dichtungen als auch Deckelemente herzustellen sind, die an sich dieselbe Funktion aufweisen, nämlich das Innere des Gehäuses gegenüber der Umgebung eines Kabelbaumsteckers abzudichten.

Ein weiterer Nachteil der Ausführung besteht darin, dass zusätzliche Arbeits- und Montageschritte notwendig sind, um Dichtungen einzusetzen, die das Gehäuseinnere gegenüber dessen Umgebung abdichten. Dabei ist bei der Montage sehr genau darauf zu achten, dass die Dichtung sowohl dicht an der aus dem Gehäuse austretenden Einzelader als auch an dem Deckelelement bzw. Gehäuse selbst anliegt.

Bei der Montage eines solchen Kabelbaumsteckers besteht auch die Gefahr, dass die für die Funktion des Kabelbaumsteckers wichtige Dichtungen vergessen werden.

Durch die US-A-6 132 256 ist ein Kupplungsstecker, insbesondere für eine Lambda-Sonde bekannt. Dieser weist ein Gehäuse auf, das einen Grundkörper und ein Deckelelement enthält. Ferner sind in dem Kupplungsstecker elektrische Bauteile vorhanden, die in das Gehäuse einlegbar und fixierbar sind. Des weiteren ist ein Abgleichelement für eine Lambdasonde sowie Dichtungen für aus dem Kupplungsstecker austretende Einzeladern vorhanden.

Aufgabe der Erfindung ist es, einen rCupplungsstecker mit einem Deckelelement auszubilden, das zugleich als Abdeckelement und Dichtungselement dient. Diese Aufgabe wird, ausgehend von einem Kupplungsstecker entsprechend den gattungsgemäßen Merkmalen des Anspruchs 1, durch die kennzeichnenden Merkmale des Anspruchs 1 gelöst. Bei dieser Anordnung dient das Abdeckelement zum Abdecken des Abgleichselements und es weist integrale Dichtungen für aus dem Gehäuse des Steckers austretende Einzeladern auf. Dadurch ergibt sich der Vorteil, dass der Kupplungsstecker fertigungstechnisch kostengünstig hergestellt werden kann.

Vorteilhafterweise besteht das Deckelelement aus PBT (Polybutylenterephthalt) oder gleichwertigen Materialien und die Dichtungen sind unmittelbar an das Deckelelement angespritzt.

Alternativ hierzu ist vorgesehen, die Dichtungen vor der Montage des Deckelelements an diesem anzubringen. Eine Verlierschutz verhindert, dass die Dichtung sich von dem Deckelelement, beispielsweise bei der Bevorratung der Deckelelemente, löst.

Ein weiteres vorteilhaftes Ausführungsbeispiel der Erfindung besteht darin, dass das Deckelelement durchsichtig gestaltet ist. Dadurch ist es möglich festzustellen, ob die Dichtungen form- und lagegerecht sowohl an dem Grundkörper als auch an den aus dem Grundkörper herausführenden Einzeladern anliegen.

Weitere vorteilhafte Ausgestaltungen gehen aus nachfolgenden Beschreibungen, den Ansprüchen und den Zeichnungen hervor.

### Zeichnungen

Es zeigen:
- **Fig. 1**: Eine Seitenansicht auf den erfindungsgemässen Kupplungsstekker, mit geschlossenem Deckelelement;
- **Fig. 2**: eine Rückansicht auf den Kupplungsstecker gemäss Fig. 1;
- **Fig. 3**: eine Draufsicht auf den Kupplungsstecker gemäss Fig. 1;
- **Fig. 4**: einen Schnitt durch den Kupplungsstecker gemäss Fig. 1;

### Beschreibung eines Ausführungsbeispiels

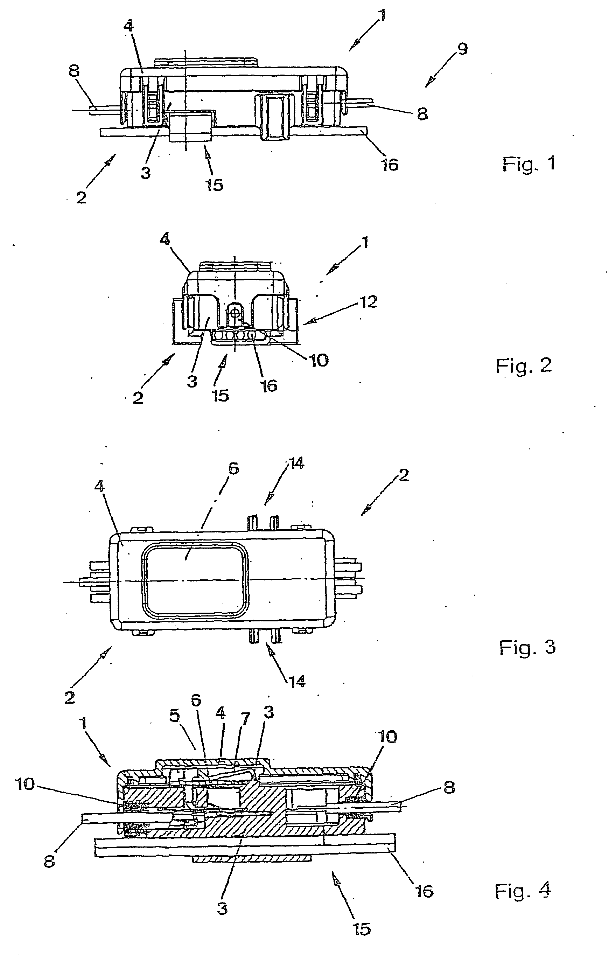

Bei dem in den Fig. 1 bis 4 dargestellte Kupplungsstecker 1 handelt es sich um einen solchen Stecker, der aus einem Gehäuse 2 besteht, dass sich aus einem Grundkörper 3 und einem Deckelelement 4 zusammensetzt.

Auf dem Grundkörper 3 ist in einer Haltevorrichtung 5 eine Abgleicheinheit 6 angeordnet, die wiederum über elektrische Kontaktelemente 7 mit der über ein Verbindungselement in Form einer oder mehrerer Einzeladern 8 verbundenen Lambda-Sonde (in den Zeichnungen nicht näher dargestellten) in Verbindung steht.

Die elektrischen Kontaktelemente 7 bestehen aus leiterbahnähnlich geformten Metallstreifen, die u.a. im Bereich der Kupplungsmöglichkeit 9 des Kupplungssteckers 1 mit ihrer einen Seite enden.

Die Abgleicheinheit 6 wird über als Teil der Haltevorrichtung 5 ausgebildete Führungselemente (in den Zeichnungen nicht näher dargestellt), die zum grössten Teil an dem Grundkörper 3 angeordnet sind, geführt und durch die elektrischen Kontaktelemente 7 positionsgerecht gehalten.

Vorzugsweise weist der Kupplungsstecker 1 an seinem Umfang Nuten 14 auf, die es erlauben, einen Kupplungsstecker 1 in dafür vorgesehene Halter einzufügen.

Zusätzlich sind im Grundkörper 2 Halte- und Fixierelemente 15, so wie es insbesondere in Fig. 1, 2 und 4 dargestellt ist, angeordnet, die es erlauben, den Kupplungsstecker 1 an elektrischen Leitungen 16 anzuordnen.

Hierzu ist das Halte- und Fixierelement 15 clipartig ausgebildet, so dass der Kupplungsstecker 1 bei geöffneter Stellung des Halteelements 15 auf einen Kabelstrang (elektrische Leitungen 16) gesteckt werden kann, und mittels einer weiteren Bewegung dieses dann verschlossen werden kann.

Dadurch ist die Gelegenheit gegeben, den Kupplungsstecker beispielsweise an einen Motor (Halter) zu befestigen.

Ferner sind an dem Deckelelement 4 Dichtungen 10 angeordnet, die im montierten Zustand, wie es in den Figuren dargestellt ist, sowohl dicht an dem Deckelelement 4 als auch an dem Gehäuse 2 anliegen. Zudem sind die Einzeladern 8 dicht umschlossen, so dass das Innere des Gehäuses 2 gegenüber dem Äusseren vollständig abgedichtet ist.

Die Dichtungen 10 sind an dem Deckelement 4 verliersicher angeordnet und werden bei der Montage zusammen mit dem Deckelelement 4 auf den Grundkörper 3 aufgebracht.

Aufgrund seiner geringen äusseren Masse ist es auch möglich, den Kupplungsstecker in einem Rillenrohr unterzubringen.

## Patentansprüche

1. Kupplungsstecker (1), insbesondere für eine planare Lambda-Sonde, bestehend aus einem Gehäuse (2), nämlich einem Grundkörper (3) und einem Deckelelement (4), sowie elektrischen Bauteilen, die in das Gehäuse einlegbar und fixierbar sind, und einem Abgleichelement (6) für eine Sonde, insbesondere eine planare Breitband-Lambdasonde, die in dem Kupplungsstecker (1) oder über ein weiteres Kontaktelement ausserhalb des Kupplungssteckers anzubringen ist, wobei das Abgleichelement (6) durch das Deckelelement (4) abgedeckt ist, sowie mindestens einer Dichtung (10), **dadurch gekennzeichnet, dass** die Dichtung die aus dem Kupplungsstecker (1) austretende Einzelader gegenüber dem Inneren des Gehäuses (2) abdichtet, und das Deckelelement (4) und die Dichtung (10) ein einstückiges Teil bilden.

2. Kupplungsstecker nach Anspruch 1, **dadurch gekennzeichnet, dass** die Dichtung (10) an das Deckelelement (4) angespritzt ist.

3. Kupplungsstecker nach Anspruch 1, **dadurch gekennzeichnet, dass** die Dichtung (10) unverlierbar mit dem Deckelelement (4) verbindbar ist.

4. Kupplungsstecker nach Anspruch 3, **dadurch gekennzeichnet, dass** die Dichtung (10) an das Deckelelement (4) anklipsbar ist.

## Claims

1. Coupler plug (1), in particular for a planar lambda probe, composed of a housing (2), specifically a base body (3) and a cover element (4), as well as electrical components which can be inserted into the housing and secured, and an adjustment element (6) for a probe, in particular a planar broadband lambda probe, which is to be mounted in the coupler plug (1) or outside the coupler plug by means of a further contact element, the adjustment element (6) being covered by the cover element (4) and at least one seal (10), **characterized in that** the seal which seals off the individual conductor which emerges from the coupler plug (1) with respect to the interior of the housing (2) and the cover element (4) and the seal (10) form a single-piece component.

2. Coupler plug according to Claim 1, **characterized in that** the seal (10) is integrally injection moulded onto the cover element (4).

3. Coupler plug according to Claim 1, **characterized in that** the seal (10) can be connected to the cover element (4) in a captive fashion.

4. Coupler plug according to Claim 3, **characterized in that** the seal (10) can be clipped onto the cover element (4).

## Revendications

1. Fiche de couplage (1), notamment destinée à une sonde lambda planaire, se composant :
- d'un boîtier (2), formé d'un corps de base (3) et d'un couvercle (4),
- de composants électriques, posés et fixés dans le boîtier,
- d'un élément d'équilibrage (6) pour une sonde, notamment une sonde lambda à large bande planaire, installée dans la fiche de couplage (1) ou à l'extérieur de la fiche de couplage par un autre élément de contact, l'élément d'équilibrage (6) étant recouvert par le couvercle (4),
- d'au moins un joint d'étanchéité (10),
**caractérisée en ce que**
le joint d'étanchéité isole les brins individuels sortant de la fiche de couplage (1) par rapport à l'intérieur du boîtier (2), et le couvercle (4) et le joint d'étanchéité (10) forment une seule pièce.

2. Fiche de couplage selon la revendication 1,
**caractérisée en ce que**
le joint d'étanchéité (10) est injecté sur l'élément de couvercle (4).

3. Fiche de couplage selon la revendication 1,
**caractérisée en ce que**
le joint d'étanchéité (10) est assemblé de manière imperdable à l'élément de couvercle (4).

4. Fiche de couplage selon la revendication 3,
**caractérisée en ce que**
le joint d'étanchéité (10) est clipsé sur l'élément de couvercle (4).
